# EUROPÄISCHE PATENTSCHRIFT

(11) **EP 3 544 131 B1**
(45) Veröffentlichungstag und Bekanntmachung des Hinweises auf die Patenterteilung: **27.01.2021**
(21) Anmeldenummer: 18163543.4
(22) Anmeldetag: 23.03.2018
(51) Int. Cl.: H02G 1/12, H01R 43/28

(54) **KABELVERARBEITUNGSMASCHINE MIT BEWEGBAREN FÜHRUNGSELEMENTEN UND VERFAHREN ZUM EINLEGEN EINES KABELS IN EINE KABELVERARBEITUNGSMASCHINE**
CABLE PROCESSING MACHINE WITH MOVABLE GUIDING ELEMENTS AND METHOD OF INSERTING A CABLE INTO A CABLE PROCESSING MACHINE
MACHINE DE TRAITEMENT DE CÂBLES DOTÉE DES ÉLÉMENTS DE GUIDAGE POUVANT SE DÉPLACER ET PROCÉDÉ D'INSERTION D'UN CÂBLE DANS UNE MACHINE DE TRAITEMENT DE CÂBLES

(43) Veröffentlichungstag der Anmeldung: 25.09.2019
(73) Patentinhaber: KOMAX HOLDING AG, 6036 Dierikon (CH)
(72) Erfinder: EGGIMANN, Reto, 6023 Rothenburg (CH); STAUBLI, Dominik, 6048 Horw (CH)
(74) Vertreter: Inventio AG

(56) Entgegenhaltungen:
- WO-A1-2017/129658
- WO-A2-2009/141794
- DE-B3-102009 031 076
- US-A- 5 820 008

## Beschreibung

Die Erfindung betrifft eine Kabelverarbeitungsmaschine, die eine Kabelvorschubeinrichtung zum Bewegen eines Kabels in eine Vorschubrichtung umfasst, wobei diese Kabelvorschubeinrichtung wiederum einen ersten und einen zweiten Bandantrieb umfasst, zwischen denen das Kabel geführt ist, wobei das Kabel durch den Kontakt zu den angetriebenen Bändern der Bandantriebe in die Vorschubrichtung bewegbar ist. Ferner betrifft die Erfindung ein Verfahren zum Einlegen eines Kabels in eine solche Kabelverarbeitungsmaschine.

Kabelverarbeitungsmaschinen umfassen in der Regel Kabelvorschubantriebe, mit deren Hilfe das zu verarbeitende Kabel in eine Vorschubrichtung bewegt wird. Eine der verbreitetsten Formen von Kabelvorschubantrieben sind sogenannte Bandantriebe, bei denen das Kabel zwischen zwei Bandantrieben geführt ist, die jeweils angetriebene Bänder umfassen. Über den Kontakt zu diesen angetriebenen Bändern wird das Kabel in die Vorschubrichtung bewegt. Eine solche Kabelverarbeitungsmaschine ist beispielsweise aus dem Dokument EP 3 219 654 bekannt.

Ein weiterer Bandantrieb ist in dem Dokument EP 0 423 443 beschrieben.

Die Bandantriebe sind insbesondere derart ausgebildet, dass einer der Bandantriebe ortsfest an einem Gehäuse der Kabelverarbeitungsmaschine angeordnet ist, der andere jedoch auf einem Träger angeordnet ist, der relativ zum Gehäuse und somit relativ zu dem ortsfesten Bandantrieb, insbesondere rechtwinkelig zur Transportebene des Kabels, bewegbar ist, so dass der Bandantrieb zum Einlegen eines Kabels geöffnet und nachher zum Betrieb wieder geschlossen werden kann. Alternativ sind auch Kabelvorschubeinrichtungen bekannt, bei denen beide Bandantriebe bewegbar ausgebildet sind.

Neben dem Bandantrieb sind die Kabel bei Kabelverarbeitungsmaschinen durch mehrere Führungseinheiten geführt, die dafür Sorge tragen, dass das Kabel innerhalb der Kabelverarbeitungsmaschine entlang eines vorbestimmten Transportweg bewegt wird und somit eine sichere qualitativ hochwertige Bearbeitung des Kabels möglich ist. Führungseinheiten weisen üblicherweise kreisrunde Bohrungen auf, durch die das Kabel geführt ist. Beim Einlegen eines neuen Kabels muss somit das Kabel durch diese kreisrunde Bohrung der Führungseinheit hindurchgefädelt werden. Solche Führungseinheiten mit kreisrunden Bohrungen sind beispielsweise aus dem Dokument DE 10 2009 031 076 bekannt. Dieses Einfädeln wird üblicherweise von Hand vorgenommen und ist recht aufwendig. Insbesondere müssen bei der Verarbeitung von Kabeln mit unterschiedlichem Durchmesser die Führungseinheiten häufig gewechselt werden, da der Radius der Bohrung an den Durchmesser des Kabels angepasst werden muss, da bei einem zu kleinen Durchmesser der Bohrung das Kabel schlicht und einfach nicht hindurchgeführt werden kann und bei einem zu großen Durchmesser das Spiel derart groß ist, dass eine qualitativ hochwertige Verarbeitung des Kabels nicht mehr gewährleistet ist.

Eine weitere Kabelverarbeitungsmaschine mit einem Kabelvorschubantrieb und einer Führungseinheit ist aus der WO 2009/141794 A2 bekannt geworden. Die Führungseinheit weist zwei Führungselemente auf, die zusammen einen rechteckigen Kanal zur Aufnahme eines Kabels bilden. Durch Verschieben eines der Führungselemente lässt sich zum Anpassen an Kabel mit unterschiedlichen Kabeldurchmessern die Breite des Führungskanals verändern. Zum Einführen eines neuen Kabels muss das Kabel durch den Kanal der Führungseinheit hindurchgefädelt werden.

WO 2017/129658 A1 zeigt eine Kabelverarbeitungsmaschine mit einem Kabelvorschubantrieb mit einen ersten und einen zweiten Bandantrieb, zwischen denen ein Kabel geführt und durch den Kontakt zu angetriebenen Bändern der Bandantriebe in Vorschubrichtung bewegbar ist.

Es ist Aufgabe der Erfindung, eine Kabelverarbeitungsmaschine und ein Verfahren zum Einlegen eines Kabels in eine Kabelverarbeitungsmaschine anzugeben, bei denen ein Kabelwechsel auf besonders einfache Weise durchführbar ist.

Diese Aufgabe wird durch eine Kabelverarbeitungsmaschine mit den Merkmalen des Anspruchs 1 sowie durch ein Verfahren mit den Merkmalen des unabhängigen Verfahrensanspruchs gelöst. Vorteilhafte Weiterbildungen der Erfindung sind in den abhängigen Ansprüchen angegeben.

Erfindungsgemäß umfasst die Kabelvorschubeinrichtung ein erstes Führungselement sowie ein zweites Führungselement, zwischen denen das Kabel zumindest in einen Betriebsmodus der Kabelverarbeitungsmaschine geführt ist. Hierbei ist der Abstand zwischen den beiden Führungselementen veränderbar.

Durch dieses Ausbilden der Führungseinheit nicht, wie bekannt, einstückig, sondern durch zwei Führungselemente, deren Abstand zueinander veränderbar ist, wird erreicht, dass durch Einstellen eines zunächst großen Abstandes das Kabel einfach in die Kabelverarbeitungsmaschine eingelegt werden kann und anschließend durch Verringerung des Abstandes dennoch eine sichere Führung des Kabels und somit eine qualitativ hochwertige Verarbeitung des Kabels möglich ist. Insbesondere ist somit nicht mehr notwendig, die Führungseinheit in Abhängigkeit des Kabeldurchmessers zu wechseln.

Unter dem Betriebsmodus wird insbesondere derjenige Modus verstanden, bei dem die Kabelverarbeitungsmaschine während des Betriebes betrieben ist, also denjenigen Modus, in dem mit der Kabelverarbeitungsmaschine ein Kabel bearbeitet wird.

Die Kabelvorschubeinrichtung umfasst einen ersten und einen zweiten Bandantrieb, zwischen denen das Kabel geführt ist, wobei das Kabel durch den Kontakt zu angetriebenen Bändern der Bandantriebe in die Vorschubrichtung bewegbar ist.

Die beiden Führungselemente sind insbesondere in Schubrichtung gesehen stromaufwärts der Bandantriebe angeordnet. Alternativ können die Führungselemente auch stromabwärts der Bandantriebe angeordnet sein. Bei einer besonders bevorzugten Ausführungsform sind die Führungselemente stromaufwärts einer Kabellängenmesseinrichtung angeordnet.

Erfindungsgemäss sind die beiden Führungselemente in einem Kabeleinlegemodus zum Einlegen eines Kabels in einem ersten Abstand zueinander und in dem Betriebsmodus in einem zweiten Abstand zueinander angeordnet, wobei dieser zweite Abstand geringer ist als der erste Abstand. Hierdurch wird erreicht, dass bei dem größeren ersten Abstand das Kabel einfach in die Maschine eingelegt werden kann und dann durch Einstellen des zweiten Abstandes eine sichere Führung des Kabels ermöglicht ist. Insbesondere ist der zweite Abstand abhängig vom Durchmesser der Kabel, d. h., dass in Abhängigkeit des Kabeldurchmessers während des Betriebsmodus insbesondere unterschiedliche Abstände zwischen den Führungselementen eingestellt werden können, so dass bei jedem eine optimale Führung des Kabels gewährleistet ist.

Ferner sind die Führungselemente derart ausgebildet, dass, wenn sie in der Position mit dem zweiten Abstand, also im Betriebsmodus, angeordnet sind, das Kabel allseitig umschließen, so dass das Kabel in alle Richtungen geführt ist.

Umgekehrt sind die Führungselemente im Kalbeleinlegemodus derart angeordnet und derart ausgebildet, dass im Kabeleinlegemodus an einer vorbestimmten Seite zwischen den beiden Führungselementen ein Spalt ausgebildet ist, durch den hindurch das Kabel eingelegt werden kann. Insbesondere ist dieser Spalt oben ausgebildet, so dass das Kabel von oben in die Kabelverarbeitungsmaschine eingelegt werden kann. Hierdurch wird ein besonders einfaches Einlegen des Kabels ermöglicht.

Bei einer bevorzugten Ausführungsform der Erfindung ist das erste Führungselement ortsfest an einem Gehäuse der Kabelverarbeitungsmaschine angeordnet, wobei das zweite Führungselement relativ zum ersten Führungselement und somit auch relativ zum Gehäuse der Kabelverarbeitungsmaschine bewegbar angeordnet ist. Somit muss nur eines der beiden Führungselemente zum Einstellen des Abstands zwischen den Führungselementen bewegt werden.

Bei einer besonders bevorzugten Ausführungsform der Erfindung umfasst die Kabelvorschubeinrichtung einen ersten Bandantrieb, der ortsfest an einem Gehäuse der Kabelverarbeitungsmaschine angeordnet ist. Ferner hat die Kabelvorschubeinrichtung einen zweiten Bandantrieb, welcher an einem relativ zum Gehäuse bewegbaren Träger befestigt ist. Durch Bewegen dieses Trägers kann die Kabelvorschubeinrichtung geöffnet und geschlossen werden, wobei der geöffnete Zustand insbesondere zum Einlegen eines Kabels von oben zwischen den Bandantrieben und der geschlossene Zustand während des Betriebes der Kabelverarbeitungsmaschine verwendet wird. Das zweite Führungselement ist insbesondere auch an diesem Träger angeordnet. Dies hat den Vorteil, dass beim Öffnen und Schließen des Bandantriebes ebenfalls der Abstand zwischen den beiden Führungselementen automatisch verändert wird, so dass bei geöffneten Bandantrieben auch der Abstand zwischen den beiden Führungselementen so groß ist, dass das Kabel von oben eingelegt werden kann und durch Schließen der Bandantriebe automatisch die beiden Führungselemente derart aufeinander zubewegt werden, dass durch sie eine sichere Führung des Kabels erfolgt.

Bei einer alternativen Ausführungsform der Erfindung können auch beide Führungselemente relativ zum Gehäuse der Kabelverarbeitungsmaschine bewegbar ausgebildet sein. Hierdurch wird erreicht, dass der Bewegungsspielraum der Führungselemente vergrößert wird.

Die Führungselemente können insbesondere relativ zueinander translatorisch bewegbar sein. Insbesondere wird eines der beiden Führungselemente linear relativ zum anderen bewegt. Alternativ können beide Führungselemente relativ zueinander bewegt werden.

Bei einer alternativen Ausführungsform der Erfindung können die Führungselemente auch relativ zueinander zur Veränderung des Abstandes verschwenkbar ausgebildet sein.

Bei einer besonders bevorzugten Ausführungsform der Erfindung sind die Führungselemente derart ausgebildet, dass sie jeweils einen im Wesentlichen L-förmigen Querschnitt aufweisen.

Hierbei haben die Führungselemente insbesondere jeweils zwei senkrecht zueinander angeordnete Kontaktflächen zum Kontaktieren und somit Führen des Kabels. Hierbei sind die Führungselemente derart relativ zueinander angeordnet, dass jeweils eine der Kontaktflächen des einen Führungselementes parallel zu einer Kontaktfläche des zweiten Führungselementes angeordnet ist und insgesamt durch die vier Führungsflächen eine allseitige Führung erreicht wird. Somit wird die allseitige Führung auf besonders einfache Weise erreicht.

Bei einer bevorzugten Ausführungsform der Erfindung weist die Kabelvorschubeinrichtung am Auslauf, also am stromabwärtigen Ende der Kabelvorschubeinrichtung, ein Führungsrohr auf, durch das das Kabel hindurchgeführt ist. Dieses Führungsrohr umfasst eine Bremseinheit, die in einem Bremszustand das Kabel festhält, wodurch ein Bewegen des Kabels relativ zum Führungsrohr vermieden wird. Insbesondere wird das Kabel durch die Bremseinheit eingeklemmt.

Hierdurch wird erreicht, dass beim Einlegen des Kabels in die Kabelverarbeitungsmaschine das Kabel nicht relativ zum Führungsrohr bewegbar ist, und somit einfach das Führungsrohr gegriffen und in einen Rohrhalter eingesteckt werden kann, ohne dass auch gleichzeitig das Kabel gehalten werden muss. Hierdurch wird das Einlegen des Kabels, insbesondere das Einlegen von oben zwischen den Bandantrieben und den Führungselementen, weiter vereinfacht.

Die Bremseinheit ist insbesondere derart ausgebildet, dass sie eine Feder umfasst, welche in einem ersten Zustand zusammen mit dem Gehäuse des Führungsrohres, insbesondere der Innenseite des Gehäuses des Führungsrohres, das Kabel einklemmt und in einem zweiten Zustand keine Einklemmung mehr bietet.

Die Feder ist insbesondere als Blattfeder angeordnet, welche in einer Aussparung des Führungsrohres angeordnet ist und somit durch das Gehäuse des Führungsrohres hindurch in den inneren Führungskanal hineingreift und somit das Einklemmen des Kabels sicherstellen kann.

Ferner ist es vorteilhaft, wenn die Bremseinheit beim Schließen eines Klemmhebels, über den das Führungsrohr in einen Rohrhalter der Kabelvorschubeinrichtung einklemmbar ist, automatisch beim Schließen des Klemmhebels gelöst wird. Somit muss nicht extra ein Mechanismus vorgesehen werden, der das Lösen der Bremseinheit bewerkstelligt. Insbesondere kann somit auch das Lösen nicht vergessen werden und es ist kein weiterer Arbeitsschritt hierfür notwendig.

Bei einer alternativen Ausführungsform der Erfindung kann auch ein aktives Element am Rohrhalter vorgesehen sein, durch das die Bremseinheit gelöst wird.

Ein weiterer Aspekt der Erfindung betrifft ein Verfahren zum Einlegen eines Kabels in eine Kabelverarbeitungsmaschine. Bei diesem Verfahren wird zunächst ein Kabel in ein Führungsrohr eingeschoben. Anschließend wird das Führungsrohr in einen Rohrhalter der Kabelverarbeitungsmaschine eingesetzt.

Danach wird das Kabel zwischen zwei Bandantrieben einer Kabelvorschubeinrichtung der Kabelverarbeitungsmaschine sowie zwischen zwei Führungselementen zum Führen des Kabels, insbesondere von oben, eingelegt. Anschließend werden die beiden Bandantriebe aufeinander zubewegt und somit geschlossen. Ebenfalls werden die Führungselemente aufeinander zubewegt, so dass eine Führung des Kabels durch sie erfolgt.

Das Aufeinanderzubewegen der Bandantriebe und der Führungselemente kann insbesondere parallel erfolgen, indem zumindest ein beweglicher Bandantriebe und eines der Führungselemente auf demselben Träger angeordnet sind.

Unter dem Aufeinanderzubewegen der Bandantriebe bzw. der Führungselemente kann sowohl verstanden werden, dass jeweils beide Bandantriebe und beide Führungselemente relativ zu einem Gehäuse der Kabelverarbeitungsmaschine bewegt werden oder auch nur einer der Bandantriebe und einer der Führungselemente, wohingegen entsprechend der andere Bandantrieb das andere Führungselement ortsfest angeordnet sind.

Bei einer bevorzugten Ausführungsform wird das Kabel beim Einschieben in das Führungsrohr oder nach dem Einschieben über eine Bremseinheit des Führungsrohres eingeklemmt, so dass ein Bewegen des Kabels relativ zum Führungsrohr unterbunden wird. Nach dem oder beim Einsetzen des Führungsrohres in den Rohrhalter wird die Bremseinheit wieder gelöst. Hierbei kann das Lösen der Bremseinheit vorzugsweise automatisch beim Einsetzen erfolgen.

Insbesondere wird das zuvor beschriebene Verfahren mit einer der zuvor beschriebenen Kabelverarbeitungsmaschinen ausgeführt.

Ferner kann das zuvor beschriebene Verfahren mit den in den auf den unabhängigen Vorrichtungsansprüchen zurückbezogenen abhängigen Ansprüchen genannten Merkmale bzw. entsprechenden Verfahrensmerkmalen weitergebildet werden.

Weitere Merkmale und Vorteile der Erfindung ergeben sich aus der folgenden Beschreibung, die die Erfindung im Zusammenhang mit den beigefügten Figuren näher erläuteren.

Es zeigen:
- Fig. 1: eine schematische, perspektivische Darstellung eines Ausschnitts einer Kabelverarbeitungsmaschine in einem Betriebsmodus;
- Fig. 2: eine schematische, perspektivische Darstellung eines Ausschnitts der Kabelverarbeitungsmaschine nach Fig. 1 in einem Kabeleinlegemodus;
- Fig. 3: eine Draufsicht der Kabelvorschubeinrichtung der Kabelverarbeitungsmaschine nach den Fig. 1 und 2;
- Fig. 4: eine Unteransicht der Kabelvorschubeinrichtung nach Fig. 3 im Betriebsmodus;
- Fig. 5: eine weitere Unteransicht der Kabelvorschubeinrichtung nach Fig. 3 im Kabeleinlegmodus;
- Fig. 6: einen Ausschnitt der Kabelverarbeitungsmaschine nach den Fig. 1 bis 5 mit Blick auf zwei Führungselemente im Kabeleinlegemodus;
- Fig. 7: einen Ausschnitt der Kabelverarbeitungsmaschine nach den Fig. 1 bis 6 mit Blick auf die Führungselemente im Betriebsmodus;
- Fig. 8: einen Schnitt durch die Führungselemente im Kabeleinlegemodus;
- Fig. 9: einen Schnitt durch die Führungselemente im Betriebsmodus;
- Fig. 10: einen Ausschnitt der Kabelverarbeitungsmaschine nach den Fig. 1 bis 9 mit gelöstem Führungsrohr; und
- Fig. 11: eine schematische, perspektivische Darstellung des Führungsrohres der Kabelverarbeitungsmaschine nach den Fig. 1 bis 10.

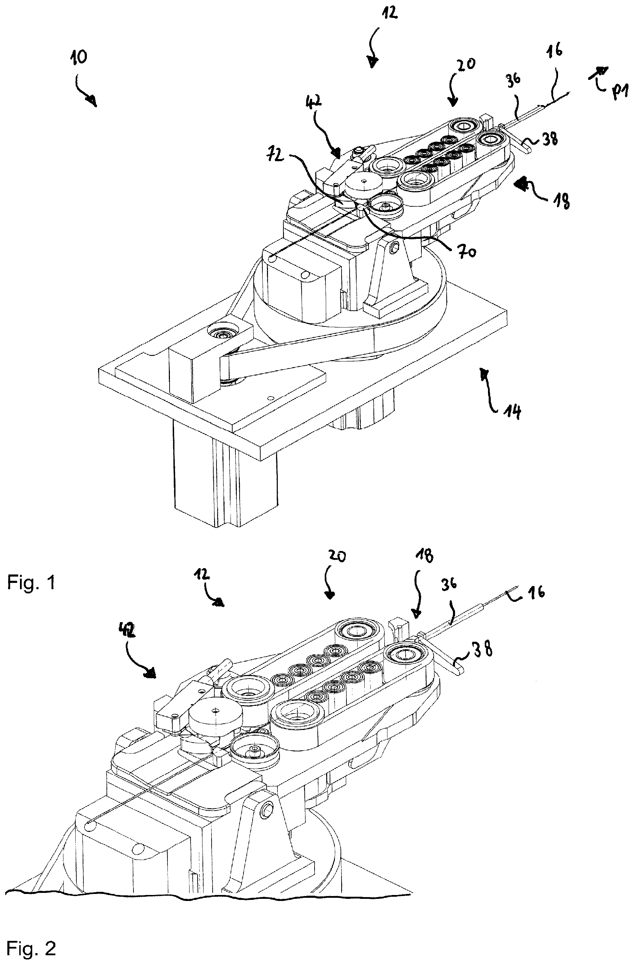

In Figur 1 ist eine schematische, perspektivische Darstellung eines Ausschnitts einer Kabelverarbeitungsmaschine 10 gezeigt, wobei insbesondere eine Kabelvorschubeinrichtung 12 gezeigt ist, mit deren Hilfe das Kabel 16 in eine Vorschubrichtung P1 bewegbar ist.
Bei der in Fig. 1 gezeigten Kabelverarbeitungsmaschine 10 ist die Kabelvorschubeinrichtung 12 als Teil einer Schwenk- und Abzugseinheit 14 ausgebildet. Bei einer alternativen Ausführungsform der Erfindung kann die Kabelvorschubeinrichtung 12 auch separat von der Schwenk- und Abzugseinheit 14 ausgebildet sein.

Die Kabelvorschubeinrichtung 12 weist einen ersten Bandantrieb 18 sowie einen zweiten Bandantrieb 20 auf.

In Fig. 1 ist die Kabelverarbeitungsmaschine 10 in einem Betriebsmodus dargestellt, bei dem die Bandantriebe 18, 20 geschlossen sind und das Kabel 16 über die Bandantriebe18, 20 in die Vorschubrichtung P1 bewegt wird und das Kabel 16 verarbeitet wird. Fig. 2 dagegen zeigt einen Ausschnitt der Kabelverarbeitungsmaschine 10 in einem Kabeleinlegemodus, bei dem die beiden Bandantriebe 18, 20 geöffnet sind, das heißt, dass zwischen ihnen ein Abstand ausgebildet ist, durch den das Kabel 16 eingeführt werden kann.

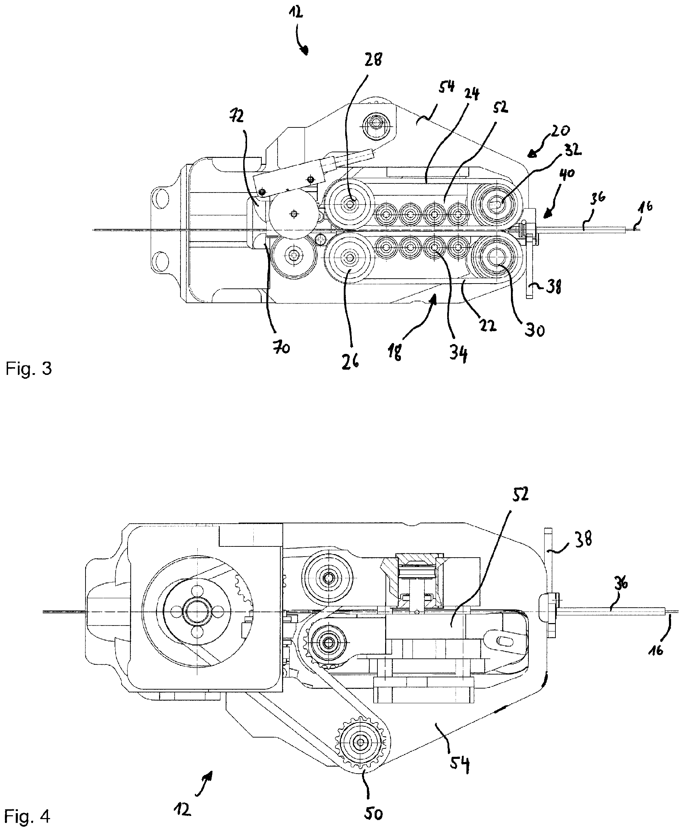

In Fig. 3 ist eine Draufsicht auf die Kabelvorschubeinrichtung 12 gezeigt. Die beiden Bandantriebe 18, 20 weisen jeweils einen Riemen 22, 24 auf, zwischen denen das Kabel 16 eingeklemmt ist und über die das Kabel 16 in die Vorschubrichtung P1 bewegt wird. Die beiden Riemen 22, 24 sind über jeweils eine Antriebsrolle 26, 28 angetrieben sowie über jeweils eine Führungsrolle 30, 32 geführt und über jeweils vier Stützrollen gestützt, von denen eine beispielhaft. mit dem Bezugszeichen 34 bezeichnet ist.

Ferner weist die Kabelverarbeitungsmaschine 10 ein Führungsrohr 36 auf, welches in Vorschubrichtung P1 gesehen hinter den Bandantrieben 18, 20, also stromabwärts der Bandantriebe 18, 20, angeordnet ist und mithilfe eines Klemmhebels 36 in einem Rohrhalter 40 befestigbar ist.

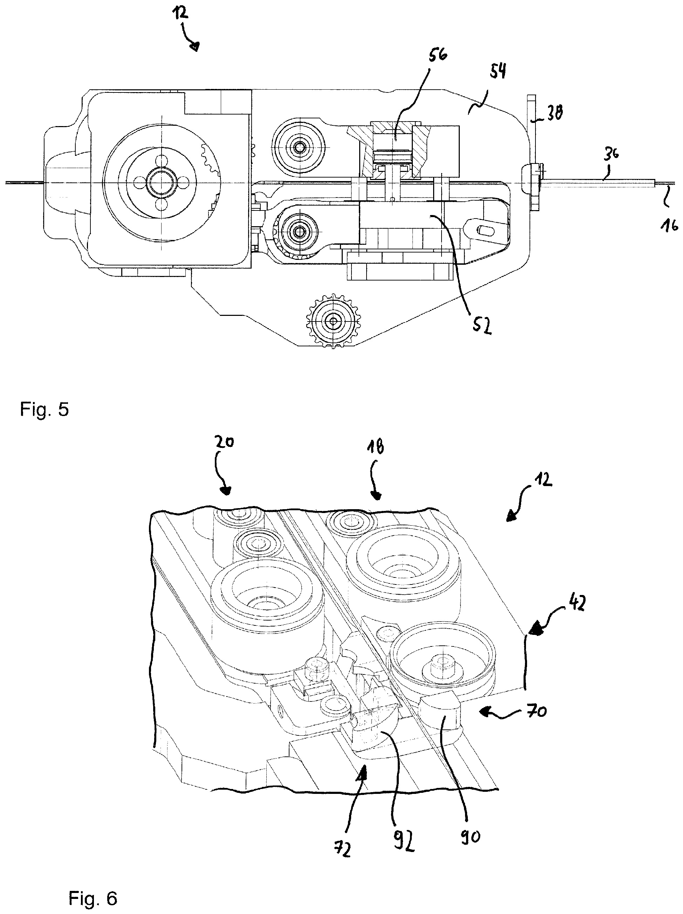

In den Fig. 4 und 5 ist jeweils eine Unteransicht der Kabelvorschubeinrichtung 12 gezeigt, wobei in Fig. 4 der Betriebsmodus und in Fig. 5 der Kabeleinlegemodus gezeigt ist. An der Unterseite ist ein angetriebener Antriebsriemen 50 vorgesehen, welcher als Zahnriemen ausgebildet ist und über den die beiden Antriebsrollen 26, 28 angetrieben werden.

Ferner ist ein Gehäuse 54 der Kabelverarbeitungsmaschine dargestellt, an dem der erste Bandantrieb 18 ortsfest angeordnet ist. Der zweite Bandantrieb 20 dagegen ist an einem Träger 52 angeordnet, welcher, wie in den Fig. 4 und 5 gezeigt, mithilfe eines Pneumatikzylinders 56 relativ zum Gehäuse 54 bewegt werden kann, wodurch der zweite Bandantrieb 20 bewegbar ist, so dass der Abstand zwischen den Bandantrieben 18, 20 eingestellt werden kann und die Kabelvorschubeinrichtung 12 zwischen dem Kabeleinlegemodus und dem Betriebsmodus verstellt werden kann.

Stromaufwärts der Bandantriebe 18, 20 ist ein Längenmesssystem 42 angeordnet. Weiter stromaufwärts des Längenmesssystems 42 sind zwei Führungselemente 70, 72 zur Führung des Kabels 16 im Bereich des Einlaufes vorgesehen.

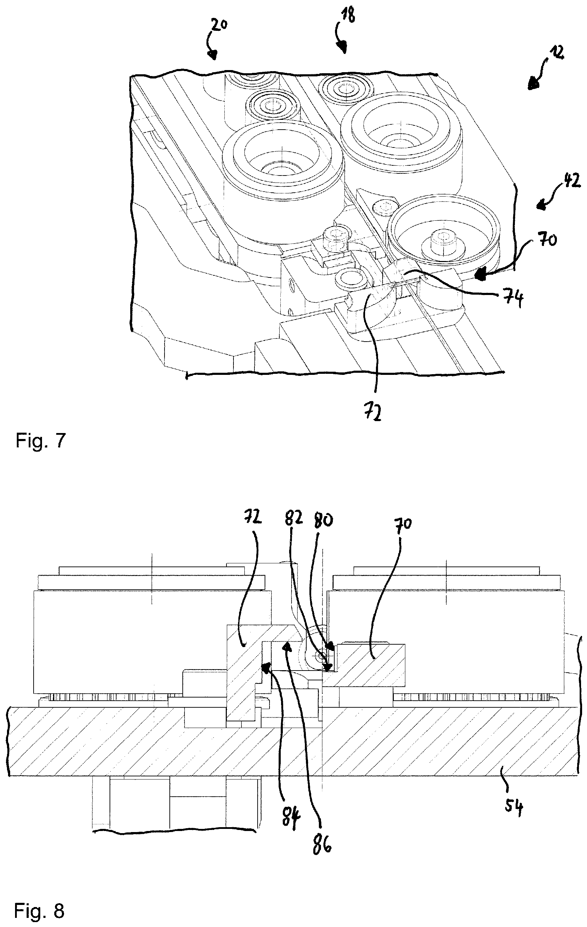

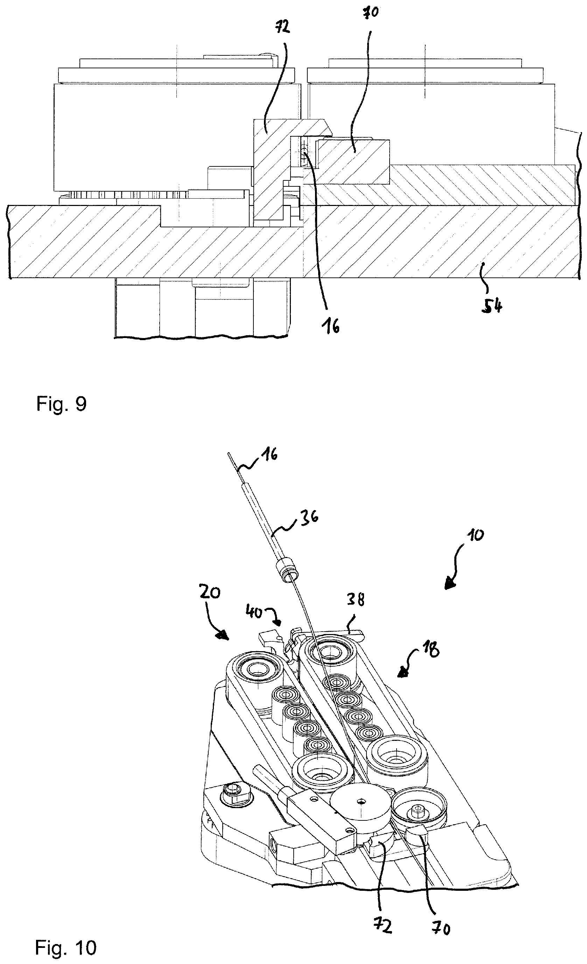

In den Fig. 6 und 7 ist jeweils ein Ausschnitt der Kabelvorschubeinrichtung 12 mit Blick auf die beiden Führungselemente 70, 72 gezeigt, wobei in Fig. 6 der Kabeleinlegemodus und in Fig. 7 der Betriebsmodus gezeigt ist. Die Fig. 8 und 9 zeigen jeweils einen Schnitt durch die Kabelvorschubeinrichtung 12, insbesondere die beiden Führungselemente 70, 72, wobei in Fig. 8 wiederum der Kabeleinlegemodus und in Fig. 9 der Betriebsmodus gezeigt ist.

Das erste Führungselement 70 ist relativ zum Gehäuse 54 der Kabelverarbeitungsmaschine 10 und somit auch relativ zum ersten Bandantrieb 18 ortsfest angeordnet. Das zweite Führungselement 72 dagegen ist an dem Träger 52 angeordnet und wird somit zusammen mit dem zweiten Bandantrieb 20 beim Öffnen der Bandantriebe 18, 20 bzw. beim Schließen der Bandantriebe 18, 20 mit bewegt. Bei einem alternativ zweiseitig öffnenden Bandantrieb können auch beide Führungselemente 70, 72 bewegt werden.

Wie in Fig. 8 und 9 sichtbar ist, sind die Führungselemente 70, 72 im Wesentlichen L-förmig ausgebildet, wobei beide Führungselemente jeweils eine senkrechte Führungsfläche 80, 84 und eine waagerechte Führungsfläche 82, 86 aufweisen. Die senkrechten Führungsflächen 80, 84 dienen zum seitlichen Führen des Kabels, die waagerechten Führungsflächen 82, 86 dagegen zum Führen des Kabels nach oben bzw. unten.

Ferner weist das bewegliche Führungselement 72 eine Nase 74 auf, wobei die waagerechte Führungsfläche 86 des zweiten Führungselementes 72 die untenliegende Begrenzungsfläche der Nase 74 bildet, welche im geschlossenen Zustand das Kabel 16 nach oben führt. Im offenen Zustand, also im Kabeleinlegemodus, ist die Nase 74 dagegen so weit von dem ersten Führungselement 70 weg bewegt, dass das Kabel 16 von oben eingelegt werden kann.

An den stromaufwärtigen Enden der Führungselemente 70, 72 sind jeweils Einlaufteile 90, 92 vorgesehen, die abgerundete Flächen aufweisen, durch die das Kabel beim Einlaufen in die Führungselemente 70, 72 geführt wird.

Bei einer alternativen Ausführungsform der Erfindung können auch mehr als zwei Führungselemente 70, 72 vorgesehen sein. Insbesondere können an anderen Stellen des Transportweges des Kabels 16 weitere solcher Führungselementpaare vorgesehen sein, die an den entsprechenden Stellen ebenfalls eine Führung des Kabels 16 übernehmen.

Ferner ist alternativ möglich, dass die beiden Führungselemente 70, 72 auch zwischen den beiden Bandantrieben 18, 20 und der Längenmesseinheit 42 oder auch hinter den Bandantrieben 18, 20 angeordnet sind.

In Fig. 10 ist eine schematische, perspektivische Darstellung eines Ausschnitts der Kabelverarbeitungsmaschine 10 gezeigt, wobei das Führungsrohr 16 von dem Rohrhalter 40 gelöst ist.

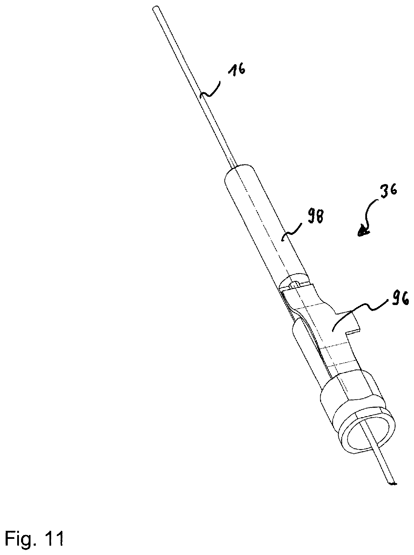

In Fig. 11 ist eine schematische, perspektivische Darstellung des Führungsrohres 36 gezeigt. Das Führungsrohr 36 weist eine als Blattfeder 96 ausgebildete Bremseinheit auf, welche durch eine Aussparung eines Gehäuses 98 des Führungsrohres 36 hindurchragt und somit in einem Bremszustand das Kabel 16 einklemmt und somit eine Bewegung des Kabels 16 relativ zu dem Führungsrohr 36 verhindert.

Die Bremseinheit 96 kann insbesondere automatisch gelöst werden, wenn der Klemmhebel 38 nach Einsetzen in den Rohrhalter 40 geschlossen wird. Alternativ kann auch ein aktives Element am Rohrhalter 40 vorgesehen sein, das die Bremseinheit 96 löst.

Insgesamt wird durch die zuvor beschriebene Kabelverarbeitungsmaschine 10 ein besonders einfaches Einlegen eines Kabels 16 ermöglicht. Hierzu wird das Kabel zunächst in das Führungsrohr 36 eingeführt und durch die Bremseinheit 96 festgeklemmt. Somit kann das Kabel 16 einfach über das Führungsrohr 36 gegriffen werden. Anschliessend wird das Führungsrohr 36 in den Rohrhalter 40 eingesetzt, und der Klemmhebel 38 geschlossen. Hierbei wird insbesondere die Bremseinheit 96 gelöst.

Ferner wird das Kabel von oben in zwischen die geöffneten Bandantrieben 18, 20 und die ebenfalls geöffneten Führungselemente 70, 72 eingelegt. Anschließend werden die Bandantriebe 18, 20 und somit automatisch auch die Führungselemente 70, 72 geschlossen, so dass das Kabel 16 nunmehr geführt ist und über die Bandantriebe 18, 20 in die Vorschubrichtung P1 bewegt werden kann.

Bei einer alternativen Ausführungsform kann das Führungsrohr 36 auch ohne Bremseinheit 96 ausgebildet sein. Entsprechend wird dann bei zuvor beschriebenen Verfahren auf die Schritte mit der Bremseinheit 96 verzichtet.

## Patentansprüche

1. Kabelverarbeitungsmaschine
mit einer Kabelvorschubeinrichtung (12) zum Bewegen eines Kabels (16) in eine Vorschubrichtung (P1), wobei die Kabelvorschubeinrichtung (12) einen ersten und einen zweiten Bandantrieb (18, 29) umfasst, zwischen denen das Kabel (16) geführt ist, wobei das Kabel durch den Kontakt zu den angetriebenen Bändern der Bandantriebe (18, 29) in die Vorschubrichtung (P1) bewegbar ist,
wobei die Kabelvorschubeinrichtung (12) weiter ein erstes Führungselement (70) und ein zweites Führungselement (72) umfasst, zwischen denen das Kabel (16) zumindest in einem Betriebsmodus der Kabelverarbeitungsmaschine (10) geführt ist, und
dass der Abstand zwischen den beiden Führungselementen (70, 72) veränderbar ist, **dadurch gekennzeichnet, dass**
die beiden Führungselemente (70, 72) in einem Kabeleinlegemodus zum Einlegen eines Kabels (16) einen ersten Abstand und in dem Betriebsmodus einen zweiten Abstand zueinander haben, wobei der zweite Abstand geringer als der erste Abstand ist, wobei im Betriebsmodus die beiden Führungselemente (70, 72) zusammen das Kabel (16) allseitig umschließen und wobei im Kabeleinlegemodus an einer vorbestimmten Seite, insbesondere oben, zwischen den beiden Führungselementen (70, 72) ein Spalt zum Hindurchführen des Kabels beim Einlegen ausgebildet ist.

2. Kabelverarbeitungsmaschine (10) nach Anspruch 1, **dadurch gekennzeichnet, dass** das erste Führungselement (70, 72) ortsfest zu einem Gehäuse (54) der Kabelverarbeitungsmaschine (10) angeordnet ist, und dass das zweite Führungselement (72) relativ zum ersten Führungselement (70) bewegbar ist.

3. Kabelverarbeitungsmaschine (10) nach Anspruch 2, **dadurch gekennzeichnet, dass** ein erster Bandantrieb (18) der Kabelvorschubeinrichtung (12) ortsfest an dem Gehäuse (54) der Kabelverarbeitungsmaschine (10) angeordnet ist, dass ein zweiter Bandantrieb (20) an einem relativ zum Gehäuse (54) zum Einlegen des Kabels (16) bewegbaren Träger (52) befestigt ist, und dass das zweite Führungselement (72) am Träger (50) angeordnet ist.

4. Kabelverarbeitungsmaschine (10) nach einem der vorhergehenden Ansprüche, **dadurch gekennzeichnet, dass** beide Führungselemente (70, 72) relativ zu einem Gehäuse (54) der Kabelverarbeitungsmaschine (10) bewegbar sind.

5. Kabelverarbeitungsmaschine (10) nach einem der vorhergehenden Ansprüche, **dadurch gekennzeichnet, dass** die Führungselemente (70, 72) relativ zueinander translatorisch bewegbar sind.

6. Kabelverarbeitungsmaschine (10) nach einem der vorhergehenden Ansprüche, **dadurch gekennzeichnet, dass** die Führungselemente (70, 72) jeweils im Querschnitt im Wesentlichen L-förmig ausgebildet sind.

7. Kabelverarbeitungsmaschine (10) nach einem der vorhergehenden Ansprüche, **dadurch gekennzeichnet, dass** die beiden Führungselemente (70, 72) jeweils zwei senkrecht zueinander angeordnete Kontaktflächen (80 bis 86) zum Kontaktieren und Führen des Kabels (16) aufweisen, und dass jeweils eine der Kontaktflächen (80, 82) des ersten Führungselementes (70) und eine der Kontaktflächen (84, 86) des zweiten Führungselementes (72) parallel zueinander angeordnet sind.

8. Kabelverarbeitungsmaschine (10) nach einem der vorhergehenden Ansprüche, **dadurch gekennzeichnet, dass** die Kabelvorschubeinrichtung (12) am Auslauf ein Führungsrohr (36) aufweist, durch das Kabel (16) geführt ist, und dass das Führungsrohr (36) eine Bremseinheit (96) umfasst, die in einem Bremszustand das Kabel (16) festhält.

9. Kabelverarbeitungsmaschine (10) nach Anspruch 8, **dadurch gekennzeichnet, dass** die Bremseinheit (96) eine Feder, vorzugsweise eine Blattfeder, umfasst.

10. Kabelverarbeitungsmaschine (10) nach Anspruch 8 oder 9, **dadurch gekennzeichnet, dass** die Bremseinheit (96) beim Schließen eines Klemmhebels (38) zum Befestigen der Bremseinheit (96) an der Kabelverarbeitungsmaschine (10) automatisch geöffnet wird.

11. Verfahren zum Einlegen eines Kabels (16) in eine Kabelverarbeitungsmaschine (10),
bei dem ein Kabel (16) durch ein Führungsrohr (36) geschoben wird,
das Führungsrohr (36) in einen Rohrhalter (40) der Kabelverarbeitungsmaschine (10) eingesetzt wird,
das Kabel (16) zwischen zwei Bandantrieben (18, 20) und zwischen zwei Führungselementen (70, 72) eingelegt wird wobei an einer vorbestimmten Seite zwischen den beiden Führungselementen (70,72) ein Spalt ausgebildet ist, durch den hindurch das Kabel (16) eingelegt wird,
die Bandantriebe (18, 20) aufeinander zubewegt werden, und
bei dem die Führungselemente (70, 72) ebenfalls aufeinander zubewegt werden.

12. Verfahren nach Anspruch 11, **dadurch gekennzeichnet, dass** das Kabel (16) zunächst durch eine Bremseinheit (96) des Führungsrohres (40) eingeklemmt wird, und dass nach oder bei dem Einsetzen des Führungsrohrs (36) in den Rohrhalter (40) die Bremseinheit (96) gelöst wird.

## Claims

1. Cable processing machine, comprising a cable feed device (12) for moving a cable (16) in a feed direction (P1), the cable feed device (12) comprising a first and a second belt drive (18, 29), between which the cable (16) is guided, the cable being movable in the feed direction (P1) by means of contact with the driven belts of the belt drives (18, 29), the cable feed device (12) further comprising a first guide element (70) and a second guide element (72), between which the cable (16) is guided at least in an operating mode of the cable processing machine (10), and the distance between the two guide elements (70, 72) can be changed, **characterized in that** the two guide elements (70, 72) have a first distance from one another in a cable inserting mode in order to insert a cable (16) and have a second distance from one another in the operating mode, the second distance being less than the first distance, the two guide elements (70, 72) together enclosing the cable (16) on all sides in the operating mode and a gap being formed between the two guide elements (70, 72) on a predetermined side, in particular at the top, in order to guide the cable through when said cable is being inserted in the cable inserting mode.

2. Cable processing machine (10) according to claim 1, **characterized in that** the first guide element (70, 72) is arranged in a fixed manner with respect to a housing (54) of the cable processing machine (10), and **in that** the second guide element (72) can be moved relative to the first guide element (70).

3. Cable processing machine (10) according to claim 2, **characterized in that** a first belt drive (18) of the cable feed device (12) is arranged in a fixed manner on the housing (54) of the cable processing machine (10), **in that** a second belt drive (20) is fastened to a carrier (52) which is movable relative to the housing (54) in order to insert the cable (16), and **in that** the second guide element (72) is arranged on the carrier (50).

4. Cable processing machine (10) according to any of the preceding claims, **characterized in that** the two guide elements (70, 72) can be moved relative to a housing (54) of the cable processing machine (10).

5. Cable processing machine (10) according to any of the preceding claims, **characterized in that** the guide elements (70, 72) can be moved in a translational manner relative to one another.

6. Cable processing machine (10) according to any of the preceding claims, **characterized in that** the guide elements (70, 72) are each substantially L-shaped in cross section.

7. Cable processing machine (10) according to any of the preceding claims, **characterized in that** the two guide elements (70, 72) each have two contact surfaces (80 to 86) which are arranged perpendicularly to one another for contacting and guiding the cable (16), and **in that** one of the contact surfaces (80, 82) of the first guide element (70) and one of the contact surfaces (84, 86) of the second guide element (72) are arranged in parallel with one another in each case.

8. Cable processing machine (10) according to any of the preceding claims, **characterized in that** the cable feed device (12) has a guide tube (36) at the outlet, through which tube the cable (16) is guided, and **in that** the guide tube (36) comprises a braking unit (96) which holds the cable (16) in a braked state.

9. Cable processing machine (10) according to claim 8, **characterized in that** the braking unit (96) comprises a spring, preferably a leaf spring.

10. Cable processing machine (10) according to either claim 8 or claim 9, **characterized in that** the braking unit (96) is automatically opened when a clamping lever (38) for fastening the braking unit (96) to the cable processing machine (10) is closed.

11. Method for inserting a cable (16) into a cable processing machine (10), wherein a cable (16) is pushed through a guide tube (36), the guide tube (36) is put into a tube holder (40) of the cable processing machine (10), the cable (16) is inserted between two belt drives (18, 20) and between two guide elements (70, 72), and, on a predetermined side, a gap being formed between the two guide elements (70, 72) through which the cable (16) is inserted, the belt drives (18, 20) are moved toward one another, and wherein the guide elements (70, 72) are also moved toward one another.

12. Method according to claim 11, **characterized in that** the cable (16) is initially clamped by a braking unit (96) of the guide tube (40), and **in that** after or while the guide tube (36) is inserted into the tube holder (40), the braking unit (96) is released.

## Revendications

1. Machine de traitement de câbles comportant un dispositif d'alimentation de câble (12) destiné à déplacer un câble (16) dans une direction d'alimentation (P1), le dispositif d'alimentation de câble (12) comprenant un premier et un deuxième entraînement par courroie (18, 29), entre lesquels le câble (16) est guidé, le câble étant mobile dans la direction d'alimentation (P1) par le contact avec les courroies entraînées des entraînements par courroie (18, 29), le dispositif d'alimentation de câble (12) comprenant en outre un premier élément de guidage (70) et un deuxième élément de guidage (72), entre lesquels le câble (16) est guidé au moins dans un mode de fonctionnement de la machine de traitement de câbles (10), et la distance entre les deux éléments de guidage (70, 72) pouvant être modifiée, ladite machine étant **caractérisée en ce que** les deux éléments de guidage (70, 72) dans un mode d'insertion de câble pour insertion d'un câble (16) ont une première distance et, dans le mode de fonctionnement, une seconde distance l'un de l'autre, la seconde distance étant inférieure à la première distance, dans lequel, en mode de fonctionnement, les deux éléments de guidage (70, 72) enserrent ensemble le câble (16) de tous côtés et, en mode d'insertion de câble, un espace est formé entre les deux éléments de guidage (70, 72) sur un côté prédéterminé, en particulier en haut, pour guider le câble à travers lors de l'insertion.

2. Machine de traitement de câbles (10) selon la revendication 1, **caractérisée en ce que** le premier élément de guidage (70, 72) est disposé de manière fixe par rapport à un boîtier (54) de la machine de traitement de câbles (10), et **en ce que** le second élément de guidage (72) est disposé mobile par rapport au premier élément de guidage (70).

3. Machine de traitement de câbles (10) selon la revendication 2, **caractérisée en ce qu'**un premier entraînement de bande (18) du dispositif d'avancement de câbles (12) est disposé de manière fixe sur le boîtier (54) de la machine de traitement de câbles (10), et **en ce qu'**un second entraînement de bande (20) est fixé à un support mobile (52) par rapport au boîtier (54) afin d'insérer le câble (16), et **en ce que** le second élément de guidage (72) est disposé sur le support (50).

4. Machine de traitement de câbles (10) selon l'une des revendications précédentes, **caractérisée en ce que** les deux éléments de guidage (70, 72) sont mobiles par rapport à un boîtier (54) de la machine de traitement de câbles (10).

5. Machine de traitement de câbles (10) selon l'une des revendications précédentes, **caractérisée en ce que** les éléments de guidage (70, 72) sont mobiles en translation l'un par rapport à l'autre.

6. Machine de traitement de câbles (10) selon l'une des revendications précédentes, **caractérisée en ce que** les éléments de guidage (70, 72) sont respectivement réalisés sensiblement en forme de L dans la section transversale.

7. Machine de traitement de câbles (10) selon l'une des revendications précédentes, **caractérisée en ce que** les deux éléments de guidage (70, 72) présentent respectivement deux surfaces de contact (80 à 86) disposées perpendiculairement l'une à l'autre pour la mise en contact et le guidage du câble (16), et **en ce que** respectivement l'une des surfaces de contact (80, 82) du premier élément de guidage (70) et l'une des surfaces de contact (84, 86) du second élément de guidage (72) sont disposées parallèlement l'une à l'autre.

8. Machine de traitement de câbles (10) selon l'une des revendications précédentes, **caractérisée en ce que** le dispositif d'avancement de câbles (12) présente un tube de guidage (36) à la sortie, par lequel le câble (16) est guidé, et **en ce que** le tube de guidage (36) comprend une unité de freinage (96) qui maintient le câble (16) dans un état de freinage.

9. Machine de traitement de câbles (10) selon la revendication 8, **caractérisée en ce que** l'unité de freinage (96) comprend un ressort, de préférence un ressort à lames.

10. Machine de traitement de câbles (10) selon la revendication 8 ou 9, **caractérisée en ce que** l'unité de freinage (96) est ouverte automatiquement lorsqu'un levier de serrage (38) est fermé afin de fixer l'unité de freinage (96) à la machine de traitement de câbles (10).

11. Procédé d'insertion d'un câble (16) dans une machine de traitement de câbles (10), selon lequel un câble (16) est poussé à travers un tube de guidage (36), le tube de guidage (36) étant introduit dans un moyen de maintien de tube (40) de la machine de traitement de câbles (10), le câble (16) étant inséré entre deux entraînements de bande (18, 20) et entre deux éléments de guidage (70, 72), un espace étant réalisé sur un côté prédéterminé entre les deux éléments de guidage (70, 72), à travers lequel le câble (16) est inséré, les entraînements de bande (18, 20) étant rapprochés l'un de l'autre, et selon lequel les éléments de guidage (70, 72) sont également rapprochés l'un des l'autre.

12. Procédé selon la revendication 11, **caractérisé en ce que** le câble (16) est initialement serré par une unité de freinage (96) du tube de guidage (40), et **en ce qu'**après ou pendant l'introduction du tube de guidage (36) dans le moyen de maintien de tube (40), l'unité de freinage (96) est détachée.
